# EUROPEAN PATENT APPLICATION

(11) **EP 3 355 017 A1**
(43) Date of publication of application: **01.08.2018**
(21) Application number: 17382035.8
(22) Date of filing: 27.01.2017
(51) Int. Cl.: F28D 7/00, F28D 7/16, F28D 21/00, F02M 26/32, F28F 9/00, F28F 9/02

(54) **EVAPORATOR**

(71) Applicant: BORGWARNER EMISSIONS SYSTEMS SPAIN, S.L.U., 36315 Vigo Pontevedra (ES)
(72) Inventor: FOLGUEIRA BALTAR, Adrián, 27850 Viveiro, Lugo (ES); GRANDE FERNÁNDEZ, José Antonio, 36206 Vigo, Pontevedra (ES); DIÉGUEZ FORTES, Manuel José, 36209 Vigo, Pontevedra (ES)
(74) Representative: ABG Patentes, S.L.

(57) **Abstract**

The present invention is an evaporator device which is suitable for evaporating a fluid by means of heat provided by a hot exhaust gas from an internal combustion engine and further allows cooling said hot exhaust gas by means of a heat exchanger.

## Description

### Object of the Invention

The present invention is an evaporator device which is suitable for evaporating a fluid by means of heat provided by a hot exhaust gas from an internal combustion engine and further allows cooling said hot exhaust gas by means of a heat exchanger.

### Background of the Invention

Today, one of the most intensely developed fields of the art is that of heat recovery in automobiles with a thermal engine. Heat recovery from exhaust gas aims to utilize heat from exhaust gas which would otherwise end up being discharged into the atmosphere.

One of the techniques utilizing said heat from exhaust gases is that of incorporating a power cycle where the transfer of heat from exhaust gases to a specific working fluid is a step within a thermodynamic cycle, the objective of which is to convert that transferred heat into work. An embodiment of a thermal cycle applied for converting the transferred thermal energy into mechanical energy is the Rankine cycle. Fluids which can be used as a working fluid vary, wherein many of said fluids are usually organic substances (with a carbon base), such as ethanol. Other fluids which can also be used as a working fluid can include water or ammonia (NH₃), in this case inorganic.

Among the particular ways of transferring heat from exhaust gases to a working fluid which is made to follow a thermodynamic cycle, there is the use of evaporators causing a phase change in said working fluid, causing it to change from liquid to vapor.

Heat exchangers with working fluid phase change, particularly those operating counter-current, have an operating limit which is known as pinch point in this field of the art, and it corresponds to the difference between the minimum temperature of the cooled fluid and the phase change temperature of the working fluid or coolant.

In fact, the pinch point limits the minimum temperature of the cooled fluid, i.e., the exhaust gas, at the outlet of the exchanger, which can only be reduced by means of a larger heat exchanger extending the exchange stage before the phase change of the coolant. Increasingly often, the temperatures of exhaust gases that are recirculated to the internal combustion engine, or EGR gas, must be the lowest possible for performance purposes, among other reasons.

Likewise, the fluid to be evaporated reaches the phase change temperature after a heating stage. This heating depends on the temperature difference between the hot gas and the fluid to be evaporated. If this difference is small, then the heat exchanger length required for raising the temperature of the fluid to be evaporated until reaching the phase change temperature is much larger.

In most situations, a larger exchanger translates into more weight and a more complex construction, but a limitation in terms of the space the device can occupy, and particularly in terms of weight, it requires alternative solutions that do not affect the maximum output temperature of the exhaust gases.

The problem to be solved that is being considered is how to configure an evaporator with a smaller length with respect to those known in the state of the art corresponding to the passage conduit for the hot gas to be cooled such that the temperature of the gas, once it has passed through the evaporator, is low enough to be used as an EGR gas for feeding the internal combustion engine.

The present invention allows overcoming the problem being considered by combining in one and the same device two stages, i.e., a stage consisting of an evaporator and a second stage with a second heat exchanger with a third cooling fluid, such that both the devices together give rise to a device with smaller dimensions.

### Description of the Invention

The present invention provides a device for evaporating a fluid by means of heat provided by the exhaust gases of an internal combustion engine, and a cooler for said exhaust gases.

According to a first inventive aspect, the present invention relates to a *device for evaporating a first fluid by means of heat provided by a second fluid, the second fluid being a hot exhaust gas from an internal combustion engine, wherein said device comprises:*
*an evaporator module comprising a passage conduit for the second fluid, the passage conduit comprises a separation surface with the first fluid for transferring heat and evaporating the first fluid through heating by means of the second fluid,*
*an EGR heat exchanger module comprising a passage conduit for the second fluid, the passage conduit comprises a separation surface with a third cooling fluid for cooling the second fluid by means of said third cooling fluid, and*
*wherein the passage conduit for the second fluid of the evaporator module and the passage conduit for the second fluid of the EGR heat exchanger module are fluidically communicated and arranged consecutive inside the device.*

Throughout the present document, exhaust gas, second fluid, EGR (exhaust gas recirculation) gas, or recirculated gas will be understood as the combustion products in gaseous phase resulting from a combustion process in an internal combustion engine. Said exhaust gases comprise high temperature gases generally coming from a Diesel or Otto cycle engine, although it may also be applied to other fluids and processes, with a temperature that is high enough in relation to the phase change temperature of the first fluid.

First fluid, working fluid or coolant will be understood as any fluid capable of absorbing heat by means of an increase in the temperature thereof and subsequent phase change. Generally, and without undermining other options, it will be considered that the first fluid is an organic coolant, such as ethanol, for example, which is in liquid phase upon entering the evaporator module and in gaseous or vapor state at the end of the heat exchange.

Third fluid will be understood as a fluid capable of absorbing heat by means of an increase in the temperature thereof. Generally, and without undermining other options, it will be considered that the third fluid is in liquid phase and will also be known as liquid coolant.

Advantageously, the evaporator module is arranged counter-current, such that the high temperature first fluid, i.e., substantially in the final segment of its circuit in the evaporator, receives heat from the high temperature second fluid, i.e., substantially upon the second fluid entering the device.

In other words, the second fluid or hot gas enters transferring heat in order to raise the temperature of the superheated vapor. During the forward movement thereof, the second fluid runs into a segment of the evaporator module where phase change of the first fluid occurs and where the liquid phase and the gaseous phase coexist, this segment being characterized in that the temperature of the first fluid is kept constant and its specific volume can be greatly increased depending on the properties of the first fluid.

Continuing with the forward movement of the second fluid along the evaporator module, said fluid reaches another segment where the first fluid is in liquid phase, raising the temperature thereof until reaching the phase change temperature. The point at which the phase change temperature is reached is the point at which the temperature of the second fluid is assessed for determining the pinch point.

After a short segment from the phase change, the second fluid no longer exchanges heat with the first fluid but rather with the third fluid, i.e., the liquid coolant, in order to reduce its temperature in a short space.

In other words, once the second fluid has gone through the evaporator module, it enters the cooler to reduce its temperature even further.

It is understood in the state of the art that in order to reduce the temperature of the second fluid, i.e., the hot gas, to a temperature suitable for feeding the intake of the engine with EGR gas (about 100°C or less), the length of the evaporator module must be increased significantly in order to have at the end a segment long enough to lower the temperature to the indicated value. In contrast, according to the present invention and contrary to how a person skilled in the art would design an evaporator module that must be shortened, a subsequent stage formed by an EGR heat exchanger module operating with a third fluid, i.e., a liquid coolant, is included in the present invention after the evaporator module.

The heat exchanger module is identified as an EGR heat exchanger module given that its function is to reduce the temperature of the second fluid, i.e., the hot gas, so that it is suitable to be recirculated to the intake of the internal combustion engine and forming part of an EGR system. Nevertheless, the device can be used without necessarily having to utilize the cooled gas as an EGR gas; this is the case when the cooled gas is released into the atmosphere.

As a result, even by adding a second stage, the length reduction in the final stage of the evaporator module more than compensates for the increase in length brought about by this second gas cooling stage.

Both the evaporator module and the EGR heat exchanger module have a passage conduit for the second fluid, both fluidically communicated and arranged consecutively inside the device. This configuration is what allows the exchange processes that have been described sequentially above.

The evaporator module comprises a separation surface with the first fluid for transferring heat from the second fluid to the first fluid. In the preferred examples of the invention, this separation surface is formed by the walls of a first group of tubes, although there may be other additional surfaces.

The EGR heat exchanger module also comprises a separation surface, this time with the third fluid, for transferring heat from the second fluid to the third fluid. In the preferred examples of the invention, this separation surface is formed by the walls of a second group of tubes, although there may be other additional surfaces.

In a particular embodiment, the evaporator comprises:
*a first plate and a second plate that are opposite and spaced from one another, determining an inner face and an outer face in each plate, the inner faces being faces arranged opposite one another and the outer faces being faces opposite the inner faces;*
*an intake manifold of the first fluid and an exhaust manifold of the first fluid in fluid communication with one another;*
*an intake manifold of the third cooling fluid and an exhaust manifold of said third fluid in fluid communication with one another,*
*a plurality of heat exchange tubes comprising*
   - *a first group of heat exchange tubes wherein each of the tubes of this first group extends between the first plate and the second plate, putting the intake manifold of the first fluid and the exhaust manifold of the first fluid in fluid communication, wherein said first group of heat exchange tubes establish a separation and heat exchange surface between the second fluid and the first fluid;*
   - *a second group of heat exchange tubes wherein each of the tubes of this second group extends between the first plate and the second plate, putting the intake manifold of the third fluid and the exhaust manifold of the third fluid in fluid communication, wherein said second group of heat exchange tubes establishes a separation and heat exchange surface between the second fluid and the third fluid; and where,*
   - *for each of the heat exchange tubes of the first group of heat exchange tubes there is a fluid communication path from the intake manifold of the first fluid to the exhaust manifold of the first fluid, the path passing through the inside of said heat exchange tube;*
   - *for each of the heat exchange tubes of the second group of heat exchange tubes there is a fluid communication path from the intake manifold of the third fluid to the exhaust manifold of the third fluid, the path passing through the inside of said heat exchange tube;*
*two side walls extending between the first plate and the second plate housing the first group and second group of heat exchange tubes and establishing between both side walls a space giving rise to the passage conduit for the second fluid through the evaporator module and to the passage conduit for the second fluid through the EGR exchanger module, wherein in the operative mode the second fluid enters through an inlet and leaves through an outlet; and*
*wherein the first group of heat exchange tubes is on the side of the inlet of the second fluid and the second group of heat exchange tubes is on the side of the outlet of the second fluid, following the direction of passage of the second fluid, for reducing the temperature of the second fluid.*

Throughout this document, plate will be understood as an essentially flat, stable, solid element that is resistant to high temperatures, with structural properties and adapted to serve as a support and also to be attached to other elements. Manifold must be understood as the element which allows establishing fluid communication between one or more conduits and a chamber or another set of conduits.

In a preferred embodiment, the first plate and the second plate comprise a first segment between which there extends the first group of exchange tubes, and a second segment between which there extends the second group of exchange tubes, said second segment being located after the first segment according to the direction of passage of the second fluid when the device is in the operative mode.

The first segment of the plates defines the group of exchange tubes making up the circuit of the evaporator module. Similarly, the second segment of the plates forms the circuit of the cooler made up of the EGR heat exchanger module with the second group of exchange tubes, the evaporator module and the EGR heat exchanger module being independent circuits for the first and third fluids.

In another preferred embodiment, the first segment comprises at least one chamber in each plate. Chamber must be interpreted as a hollow cavity or volume adapted for establishing fluid communication with another element, preferably a conduit, manifold or another chamber.

In a preferred embodiment, the chambers are formed by stacking punched sheet components attached to one another through the contact surfaces. According to one embodiment, one or more first sheet components have openings punched therein which allow receiving the ends of the exchange tubes; on these first sheet components, a plurality of second sheet components have openings punched therein coinciding with the walls of the chambers; and thirdly, one or more third continuous sheet components close the chambers formed by the second sheet components. The first and third sheet components give rise to the lower and upper bases of the chambers, respectively. The use of punched sheet components for forming the chambers is particularly advantageous for mass production since it allows high process automation and a lower cost than other methods such as, for example, machining a plate with the thickness equivalent to that attained by stacking sheet components.

In a preferred embodiment, the first group of heat exchange tubes extends between a chamber of the second segment of the first plate and a chamber of the first segment of the second plate, and wherein each chamber of one plate is in fluid communication with two or more chambers of the other plate by means of at least two heat exchange tubes, with the exception of chambers that are in fluid communication with the intake manifold or the exhaust manifold of the first fluid.

Advantageously, the chambers put heat exchange conduits belonging to two different rows of tubes in fluid communication without the use of elbows or angles, the chambers being able to be manufactured in the plate itself.

In a preferred embodiment, for each of the heat exchange tubes of the first group of heat exchange tubes there is a fluid communication path from the intake manifold of the first fluid to the exhaust manifold of the first fluid, the path passing through the inside of said heat exchange tube.

Advantageously, the fluid communication path configures a heat exchange circuit for the first fluid. According to the preferred examples of the invention, the configuration of the path has multiple segments going alternatingly from one plate to another.

An advantage of this configuration is that the first fluid enters as a liquid with a low specific volume, then a vapor phase occurs with the phase change, increasing the specific volume, and the vapor is finally superheated, also expanding more. In one embodiment, a tube is communicated through a chamber with a plurality of tubes and by allowing an increase in the effective section for the first fluid. The increasing number of tubes from one chamber to another can be adjusted according to the increase in the specific volume of the fluid to be evaporated. According to preferred examples, the configuration of the chambers can be such that final tube distribution is homogeneous even if the effective section increases due to an increase in tubes communicated with one and the same starting tube.

In a preferred embodiment, the intake manifold of the third fluid feeds the third fluid to all the inlets of the exchange tubes of the second group, and wherein the exhaust manifold of the third fluid collects the third fluid from all the outlets of the exchange tubes of the second group.

Nevertheless, according to another embodiment it is possible to use a zig-zag configuration with the use of intermediate chambers such as the one described for the first segment.

In a preferred embodiment, the ends of the tubes of the first group, the second group or both groups, are secured to a single baffle spaced from the plate for the thermal protection of the plate and of the welds of the tubes to the plates.

In a preferred embodiment, the intake manifold and the exhaust manifold of the third fluid are in the same plate. Advantageously, that the arrangement of the intake and exhaust manifolds are in the same plate and the fact that the tubes of the first segment and second segment extend between these very plates results in a compact, easy-to-manufacture device.

In a final preferred embodiment, the third fluid is a cooling fluid. A cooling fluid has the advantage of having a high thermal capacity and stable composition across a wide range of temperatures, among others.

In a second inventive aspect, the invention provides a heat recovery system for internal combustion vehicles comprising an evaporator according to any of the preceding embodiments.

### Description of the Drawings

These and other features and advantages of the invention will be shown more clearly based on the following detailed description of a preferred embodiment, given solely by way of illustrative and non-limiting example in reference to the attached drawings.
Figure 1 schematically shows a conventional counter-current evaporator.
Figure 2 shows a particular embodiment of the invention, with an evaporator and a cooler.
Figures 3A and 3B show two graphs with the evolution of the temperatures of the fluids in relation to the distance travelled inside the device.

### Detailed Description of the Invention

As described above, the present invention provides a device suitable for heat exchange between a high temperature gas and two fluids, combining an evaporator module and a cooler made up of an EGR heat exchanger module arranged one after the other, such that the evaporator module recovers most of the heat from the exhaust gases and the EGR heat exchanger module or cooler reduces the temperature of the exhaust gases as a step prior to the emission thereof into the environment or preferably for the use thereof as an EGR gas.

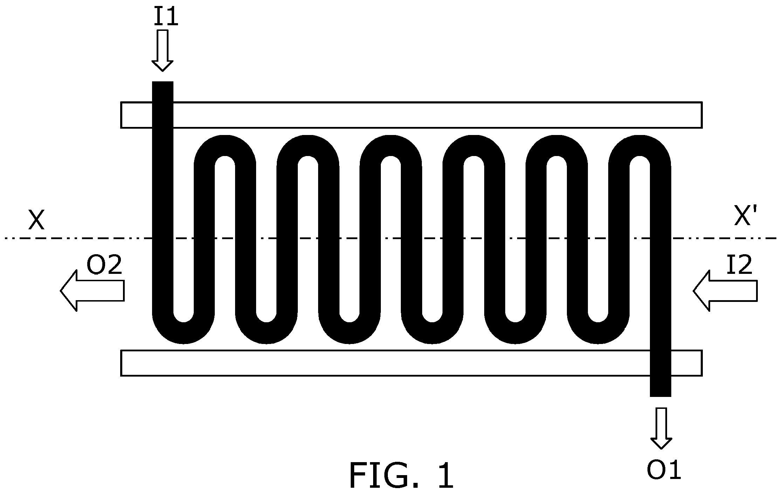

Figure 1 shows a heat exchanger operating as a conventional counter-current evaporator with phase change of one of the fluids. In devices of this type, the boiling temperature of the phase-changing fluid and the size of the device limit the minimum temperature to which the hot fluid can be cooled. If the difference between the boiling temperature of the cold fluid and the temperature of the hot fluid (pinch point) in the location where the cold fluid starts to undergo phase change is small, the heat exchange in this location and downstream of the hot gas is very little.

If the cooled gas is to be used as an EGR gas, it must have a low temperature so that it can be reintroduced into the intake of the internal combustion engine with the lowest possible density. According to the state of the art, a small temperature difference between the hot gas and the fluid intended for undergoing phase change requires a very large exchanger length so that the hot gas reaches a low enough temperature due to the low heat transfer.

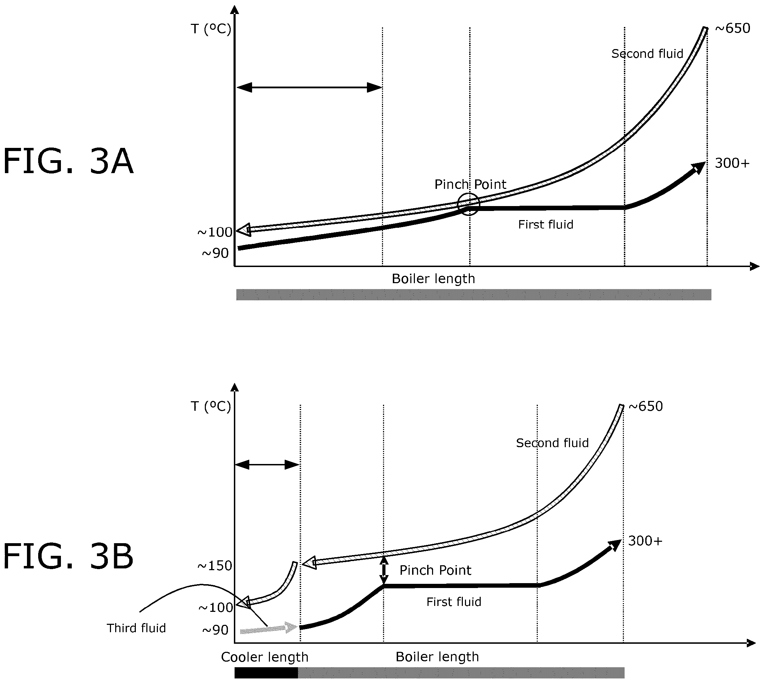

Figure 3A shows the evolution of the temperature of two fluids in a heat exchanger such as that shown in Figure 1 as a function of the distance travelled. It must be highlighted that the flow direction is opposite for the hot fluid and the cold fluid, and the abscissa axis shows the relative position of one fluid with respect to the other inside the exchanger according to the axial direction X-X' established by the hot gas flow.

Figure 3A shows the evolution of temperatures using a conventional evaporator. To the left of the pinch point, the evaporator requires a considerable length to reach an output temperature for the gas that is low enough to be used as an EGR gas. This temperature is about 100°C. A black double arrow identifies the considerable length required in this final phase of the second fluid for reaching a temperature close to 100°C given that the liquid to be evaporated starts from a temperature close to 90°C and the pinch point prevents increasing this temperature difference.

Figure 3B shows the evolution of temperatures in an evaporator device according to an embodiment of the invention wherein the use of a cooler downstream of the second fluid flow allows reducing the temperature of the second fluid, i.e., the hot gas, in a space having a much shorter length, maintaining a small pinch point.

In other words, since the second fluid can be cooled in a space having a short length according to the axial direction X-X', the outlet of the evaporator module can set the output temperature at a higher temperature. In Figure 3B and according to this embodiment, this temperature is set at about 150°C. In turn, this higher temperature establishes an also greater temperature difference with the second fluid and raising the temperature thereof to the phase change temperature in a much shorter length.

This figure also shows with a black double arrow the smaller length for preheating the second fluid, i.e., the fluid intended for being evaporated.

A thick gray horizontal line indicating the length of the evaporator device is shown below Figure 3A and Figure 3B. In Figure 3A, the length of the evaporator occupies the entire device. In Figure 3B, although an additional heat exchanger is added, contrary to what is expected by a person skilled in the art, the reduction in the length of the evaporator module plus that of the EGR heat exchanger module has a length significantly smaller than that shown in Figure 3A working between the same temperature values.

To reach an output temperature of the hot second fluid that is significantly below the boiling temperature of the first fluid without negatively affecting device size, a heat exchange device combining an evaporator module and an EGR heat exchanger module or a cooler after the preceding device is proposed, configuring two independent circuits.

The function of the evaporator device is to extract heat from exhaust gases in order to use it in a Rankine power cycle with an organic working fluid, for example, ethanol. In one embodiment, the working fluid of the power cycle is the first fluid circulating through the inside of the evaporator module circuit. Said power cycle can advantageously be used for recovering energy by means of an electric generator.

As a result of the aforementioned temperature limitations, according to an example of the invention an additional subsequent cooling stage is incorporated for reducing the temperature of the exhaust gases below a preestablished temperature, making the cooled EGR gas suitable for being introduced into the intake. For such purpose, an EGR heat exchanger module or cooler is arranged after the evaporator module in a separate circuit, sharing the conduit for the gas as a common conduit, which gas preferably works without a phase change, such that a simple and lightweight configuration can be maintained.

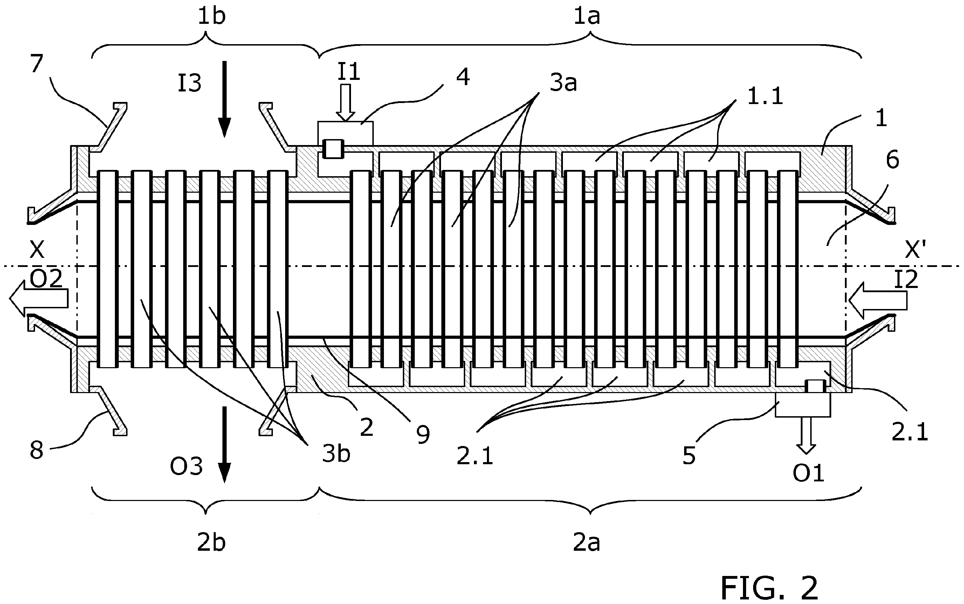

Figure 2 shows a schematic sectional view of the elements forming this embodiment of the device.

Generally, this embodiment comprises two plates (1, 2) and two walls (6), parallel to one another in twos and arranged at a right angle with respect to one another. Two groups of heat exchange tubes (3) which extend between the first plate (1) and the second plate (2) and which according to the orientation shown in Figure 2 are located in the upper and lower parts, respectively, go through the essentially prismatic conduit forming these four surfaces. The inlet (12) and the outlet (02) of the second fluid are located at the ends of the conduit. The first group of tubes (3a) corresponding to the evaporator module must be located in the high temperature part together with the inlet (12) of the second fluid. In turn, the second group of tubes (3b) corresponding to the EGR heat exchanger module or cooler must be located in the low temperature part together with the outlet (02) of the second fluid. The inlet and outlet (12, 02) are conduits suitable for putting a high temperature gas in fluid communication with an exhaust gas circuit of a combustion engine, in this embodiment with an outlet towards an EGR valve for managing the flow rate at the intake conduit.

The conduits (3) or heat exchange tubes are conduits suitable for conducting a fluid having the characteristics of the first fluid in the case of the first group of tubes (3a), or of the third fluid in the case of the second group of tubes (3b), and for transferring heat with a fluid having the characteristics of the second fluid. In the case of the conduits of the first group (3a), they must be suitable so that the first fluid undergoes phase change during the exchange, with the volume and pressure changes this entails. Preferably, they must be resistant to corrosion in order to withstand at least the corrosive action of the hot exhaust gases, and also to a high level of fouling. The welds or those attachment means carried out between the chambers (1.1, 2.1), the manifolds and other elements must also be resistant to high temperatures, pressures and corrosion. Given that the device can advantageously be used in a vehicle, it is also desirable for said attachments to also be resistant to vibrations within a broad frequency range.

The manifolds (4, 5, 7, 8) have the function of putting the inlets or outlets of the first and third fluid feeding conduits in fluid communication with the exchange tubes (3), either directly or indirectly through chambers (1.1, 2.1) or intermediate volumes. As indicated above, the attachments between tubes (3), manifolds (4, 5, 7, 8) and chambers (1.1, 2.1) must be able to withstand high pressures and temperatures as well as a corrosive medium.

The function of the chambers (1.1, 2.1) is to provide a constructively simple alternative for direction changes in the fluid path; direction changes in the fluid path are usually achieved by including a bent conduit segment between two straight conduit segments, which can be carried out either by bending the conduit or welding an elbow between the segments. In both cases, the construction of tubes connecting with a plurality of tubes is complex. In contrast, in the present invention a row of exchange tubes (3) opening into a specific chamber (1.1, 2.1) can connect with two or more rows of exchange tubes (3) from the same chamber such that the flow rate of the first row is distributed through a larger number of tubes compensating, for example, for the increase in specific volume during phase change or during heating of the superheated vapor.

This way of connecting tubes by means of chambers (3) does not have to be between rows of tubes (3), rather along one row an exchange tube (3) reaching the chamber (1.1, 2.1) can be in correspondence with a plurality of exchange tubes (3) leaving the same chamber (1.1, 2.1).

The expression used indicating that a tube (3) reaches or arrives at a chamber (1.1, 2.1), or the opposite expression indicating that a tube (3) leaves from a chamber (1.1, 2.1) must be interpreted as the tube being in fluid communication with the chamber, but in the operative mode, the fluid goes from the tube (3) to the chamber (1.1., 2.1) in the first case and the fluid goes from the chamber (1.1, 2.1) to the tube (3) in the second case.

Continuing with the description of Figure 2, the hot gas or second fluid enters through the inlet (12) of the second fluid, flows through the first segment of tubes (3a) transferring heat to the first group of tubes (3a), and then flows through the second segment of tubes (3b) also transferring part of its heat until reaching a temperature which can be below 100°C.

Along the passage through the first group of tubes (3a), the transferred heat passes to the first fluid circulating in counter-current. The entry of the first fluid (I1) occurs close to the separation between the first group of tubes (3a) and the second group of tubes (3b) such that the first fluid moves forward following a zig-zag path alternating between one plate (1) and another plate (2), with an overall movement according to the axial direction towards the inlet (12) of the second fluid, i.e., the hot gas. The expression "with an overall movement" is used because in a set of tubes contained on a plane transverse to the axial direction, the path may have a zig-zag configuration on the same plane before passing to the next plane or to another group of tubes.

The connection between tubes (3) must be such that from the hot gas inlet to the hot gas outlet the effective section is an increasing effective section, even if it increases in segments, by means of the communication of one or more tubes (3) with a larger number of tubes (3) through the corresponding chamber (1.1, 2.1), as described.

In contrast, in this embodiment the inlet (13) of the third fluid or liquid coolant and the outlet (03) thereof are communicated by the tube bundle of the second group (3b) directly without the third fluid following a zig-zag path. Nevertheless, the same zig-zag configuration used with the first group of tubes (3a) is applicable to this second group of tubes by adding the required intermediate chambers.

The flow rate of the third fluid or liquid coolant is therefore higher and allows a more abrupt drop in the second fluid temperature. This more abrupt drop allows a higher second fluid temperature at the inlet of the EGR heat exchanger module; in other words, a smaller length of the evaporator module is allowed. Therefore, the drastic overall device size reduction is due, among others, to:
- shortening of the evaporator module as it allows a higher second fluid output temperature, increasing the temperature difference between said second fluid and the first fluid to be evaporated, and as a result a higher heat transfer rate in the evaporator module;, and
- shortening of the final hot gas cooling phase after passing through the evaporator module since a third fluid having flow rate and temperature parameters different from the first fluid is used and they therefore allow heat removal in a smaller length.

In other words, in the second group of tubes (3b) the second fluid transfers its temperature at a higher rate because the liquid coolant can have a lower temperature, a different flow rate, and can be a fluid with greater thermal capacity.

Likewise, in this embodiment a plate (9) is located spaced from the inner wall through which the second fluid circulates for protecting the welded attachments between the tubes (3) and the plates (1, 2).

According to another embodiment, the attachment between the tubes (3) and any of the plates is through a single baffle. This is the case of plates formed by stacking punched sheet components or baffles and in which the attachment is carried out with the first baffle or sheet.

## Claims

1. A device for evaporating a first fluid by means of heat provided by a second fluid, the second fluid being a hot exhaust gas from an internal combustion engine, wherein said device comprises:
an evaporator module comprising a passage conduit for the second fluid, the passage conduit comprises a separation surface with the first fluid for transferring heat and evaporating the first fluid through heating by means of the second fluid,
an EGR heat exchanger module comprising a passage conduit the second fluid, the passage conduit comprises a separation surface with a third cooling fluid for cooling the second fluid by means of said third cooling fluid, and
wherein the passage conduit for the second fluid of the evaporator module and the passage conduit for the second fluid of the EGR heat exchanger module are fluidically communicated and arranged consecutively inside the device.

2. The device according to claim 1 comprising:
a first plate (1) and a second plate (2) that are opposite and spaced from one another, determining an inner face and an outer face in each plate, the inner faces being faces arranged opposite one another and the outer faces being faces opposite the inner faces;
an intake manifold (4) of the first fluid and an exhaust manifold (5) of the first fluid in fluid communication with one another;
an intake manifold (7) of the third cooling fluid and an exhaust manifold (8) of said third fluid in fluid communication with one another,
a plurality of heat exchange tubes (3) comprising
- a first group (3a) of heat exchange tubes (3) wherein each of the tubes of this first group (3a) extends between the first plate (1) and the second plate (2), putting the intake manifold (4) of the first fluid and the exhaust manifold (5) of the first fluid in fluid communication, wherein said first group (3a) of heat exchange tubes (3) establish a separation and heat exchange surface between the second fluid and the first fluid;
- a second group (3b) of heat exchange tubes (3) wherein each of the tubes of this second group (3b) extends between the first plate (1) and the second plate (2), putting the intake manifold (7) of the third fluid and the exhaust manifold (8) of the third fluid in fluid communication, wherein said second group (3b) of heat exchange tubes (3) establishes a separation and heat exchange surface between the second fluid and the third fluid; and wherein
- for each of the heat exchange tubes (3) of the first group (3a) of heat exchange tubes (3), there is a fluid communication path from the intake manifold (4) of the first fluid to the exhaust manifold (5) of the first fluid, the path passing through the inside of said heat exchange tube (3);
- for each of the heat exchange tubes (3) of the second group (3b) of heat exchange tubes (3), there is a fluid communication path from the intake manifold (7) of the third fluid to the exhaust manifold (8) of the third fluid, the path passing through the inside of said heat exchange tube (3);
two side walls (6) extending between the first plate (1) and the second plate (2) housing the first group (3a) and second group (3b) of heat exchange tubes (3) and establishing between both side walls (6) a space giving rise to the passage conduit for the second fluid through the evaporator module and to the passage conduit for the second fluid through the EGR exchanger module, wherein in the operative mode the second fluid enters through an inlet (12) and leaves through an outlet (02); and
wherein the first group (3a) of heat exchange tubes (3) is on the side of the inlet (12) of the second fluid and the second group (3b) of heat exchange tubes (3) is on the side of the outlet (02) of the second fluid, following the direction of passage of the second fluid, for reducing the temperature of the second fluid.

3. The device according to the preceding claim, wherein the first plate (1) and the second plate (2) comprise a first segment (1a, 2a) between which there extends the first group (3a) of exchange tubes (3), and a second segment (1b, 2b) between which there extends the second group (3b) of exchange tubes (3), said seconds segments (1b, 2b) being located after said first segments (1a, 2a) according to the direction of passage of the second fluid.

4. The device according to any of claims 2 or 3, wherein the first group (3a) of heat exchange tubes (3) extends between a chamber (1.1) of the first segment (1a) of the first plate (1) and a chamber (2.1) of the first segment (2a) of the second plate (2), and wherein each chamber (1.1, 2.1) of each plate (1, 2) is in fluid communication with two or more chambers (1.1, 2.1) of the other plate (1, 2) by means of at least two heat exchange tubes (3), with the exception of chambers (1.1, 2.1) that are in fluid communication with the intake manifold (4) of the first fluid or the exhaust manifold (5) of the first fluid.

5. The device according to any of claims 2 to 4, wherein the second group (3b) of heat exchange tubes (3) extends between a chamber (1.1) of the second segment (1b) of the first plate (1) and a chamber (2.1) of the second segment (2b) of the second plate (2), and wherein each chamber (1.1, 2.1) of each plate (1, 2) is in fluid communication with two or more chambers (1.1, 2.1) of the other plate (1, 2) by means of at least two heat exchange tubes (3), with the exception of chambers (1.1, 2.1) that are in fluid communication with the intake manifold (7) of the third fluid or the exhaust manifold (8) of the third fluid.

6. The device according to any of claims 4 or 5, wherein the chambers (1.1, 2.1) are formed by stacking punched sheet components.

7. The device according to any of claims 2 to 6, wherein for each of the heat exchange tubes (3) of the second group (3b) of heat exchange tubes (3), there is a fluid communication path from the intake manifold (7) of the third fluid to the exhaust manifold (8) of the third fluid, the path passing through the inside of said heat exchange tube (3).

8. The device according to any of claims 2 to 7, wherein the intake manifold (7) of the third fluid feeds the third fluid to the available inlets of the exchange tubes (3) of the second group (3b), and wherein the exhaust manifold (8) of the third fluid collects the third fluid from the available outlets of the exchange tubes (3) of the second group (3b).

9. The device according to any of claims 2 to 8, wherein the ends of the tubes (3) are held with a single baffle.

10. The device according to any of claims 2 to 9, wherein a plate (9) spaced from the walls through which the second fluid flows protects the welds between the exchange tubes (3) and the plates (1, 2).

11. The device according to any of claims 2 to 10, wherein the intake manifold (7) and the exhaust manifold (8) of the third fluid are in the same plate (1, 2).

12. The device according to any of the preceding claims, wherein the third fluid is a liquid coolant.

13. A heat recovery system for internal combustion vehicles comprising a device according to any of the preceding claims.
